# EUROPEAN PATENT SPECIFICATION

(11) **EP 2 347 229 B1**
(45) Date of publication and mention of the grant of the patent: **27.03.2013**
(21) Application number: 09744327.9
(22) Date of filing: 14.10.2009
(51) Int. Cl.: G01H 1/00, G01M 13/04

(54) **Data analyzer**
Datenanalysator
Analyseur de données

(30) Priority: 14.10.2008 US 196058 P
(43) Date of publication of application: 27.07.2011
(73) Proprietor: Aktiebolaget SKF, 415 50 Göteborg (SE)
(72) Inventor: MCGOOGAN, Gerard, Philpston (GB)
(74) Representative: Burö, Sven Peter
(86) International application number: PCT/EP2009/007372
(87) International publication number: WO 2010/043385

(56) References cited:
- EP-A2- 1 258 713
- WO-A1-2009/068052
- GB-A- 2 446 035

## Description

### TECHNICAL FIELD

This invention relates to data collectors/analyzers, particularly for in-situ analysis and/or diagnosis of the conditions of bearings. More particularly, the present invention relates to off-line vibrational bearing analyzers which comprise digital signal processing.

### BACKGROUND

Vibrations measured by bearing testers or analyzers, for example while a machine is in operation and/or when a machine is subjected to a controlled external excitation, provide an indication of bearing conditions and/or lubrication conditions and/or other mechanical conditions. This may be used to detect abnormalities, plan preventive maintenance and avoid bearing failure. Some vibrational analysis systems comprise a network of sensors which are permanently installed on a plurality of machines and which provide data to a central processor on a continuous or periodic basis. On the other hand, the vibrational analyzers of the present invention are off-line analyzers, that is to say they are devices which a maintenance engineer will take sequentially to each machine which he wishes to analyse. Such off-line analyzers are generally hand-held and generally incorporate or are connectable to one or more sensors, and have processing means for analysing the signal from the sensor and a display. They often permit the collection/recording of data for subsequent downloading to a separate computer system. They are also sometimes called portable data collectors. GB 2 446 035 discloses a portable route-based machine data collector that stores audio files to supplement associated machine performance data, such as vibration data. The audio files, which may include voice comments, audio segments of raw vibration data, or frequency-shifted components of the vibration data, are stored in the data collector as standard-format digital audio files.

The inventors have perceived that off-line data collectors/analyzers and in particular vibration bearing analyzers with configurations in which demodulation and/or filtering of a signal derived from an analogue sensor are performed, may be improved and/or provided with improved functionality.

### SUMMARY OF THE INVENTION

According to one of its aspects, the present invention provides an off-line signal analyzer comprising an analogue to digital converter (ADC). The ADC converts analogue input signals to digital signals. The analogue input signals comprise a phase. The analyzer also comprises a digital signal processor (DSP) configured to perform digital processing on the digital signals from the ADC. The signal analyzer comprises a digital to analogue converter (DAC) configured to provide an analogue output signal derived from the DSP to an output. According to the invention the DAC is synchronized with the ADC at least with respect to the signal phase.

Suitably the ADC and the DAC have a common control clock, that is they are clocked by the same clock signal and are thus synchronized. To fully control the signal processing, it is advantageous if also the DSP has a common control clock with the ADC and/or the DAC.

Preferably one of the ADC, the DAC, or the DSP is a control clock master, that is generating the control clock signals, and the others are control clock slaves, that is just receiving the control clock signals from the control clock master.

According to another one of its aspects, the present invention provides an off-line analyzer comprising a digital signal processor configured to perform digital processing on a signal comprising bearing vibration data derived from a sensor input. According to the invention the bearing analyzer comprises a digital to analogue converter configured to provide an analogue signal to an output, the analogue signal being derived from the digital signal processor. The digital signal processor will typically perform digital filtering and digital demodulation as part of the digital signal processing.

The output may provide a real time output, that is to say an output which is configured to be contemporaneous with the input to the vibrational analyzer (for example from a sensor) as opposed, for example, to an output which is stored by the vibrational analyzer for subsequent downloading when data collection has been completed. There may be a time delay between the input to the vibrational analyzer and the real time output; this may be up to a few seconds, for example up to 2 or 3 seconds.

The output may be an external output, that is to say an output configured to provide a signal to an external or peripheral device. The term "peripheral device" is intended to denote a device that may be connected to the vibrational analyzer but which is distinct from the components which are integral with the vibrational analyzer. The components which are integral with the vibrational analyzer include, for example, integral sensors, integral displays (for example an integral screen), integral data processors and integral data storage devices (for example a memory or memory card which may be removable).

The output may be a multifunctional external output, where the multifunctional output is configured to provide an output signal to at least two different devices. For example, it may be configured to provide a signal to headphones and to provide a signal to a strobe. In some embodiments, the multifunctional external output provides a signal to one device at a time. For example, headphones could be connected to the multifunctional external output at one time and subsequently disconnected to enable connection of a strobe.

Preferably, the multifunctional output is configured such that it may be connected simultaneously to at least two devices, for example such that it can simultaneously provide an output signal to at least two devices, for example to headphones and a strobe.

According to the invention the multifunctional external output is configured to transmit an analogue signal, the analogue signal will be derived from a digital output of the digital signal processor via a digital to analogue converter.

It will be appreciated that a vibrational analyzer according to the present invention may be used to analyze the condition of other components, for example gears, in addition to bearings.

### BRIEF DESCRIPTION OF THE DRAWINGS

Embodiments of the invention will now be described, by way of example only, with reference to the accompanying drawings of which:
- Figs 1 a-1 b: are block diagrams illustrating components which may be included in and possible configurations for vibrational bearing analyzer,
- Fig 2: illustrates a block diagram of an analyzer comprising digital filtering and demodulation,
- Figs 3-11: illustrate block diagrams of particular embodiments of the present invention.

### DETAILED DESCRIPTION

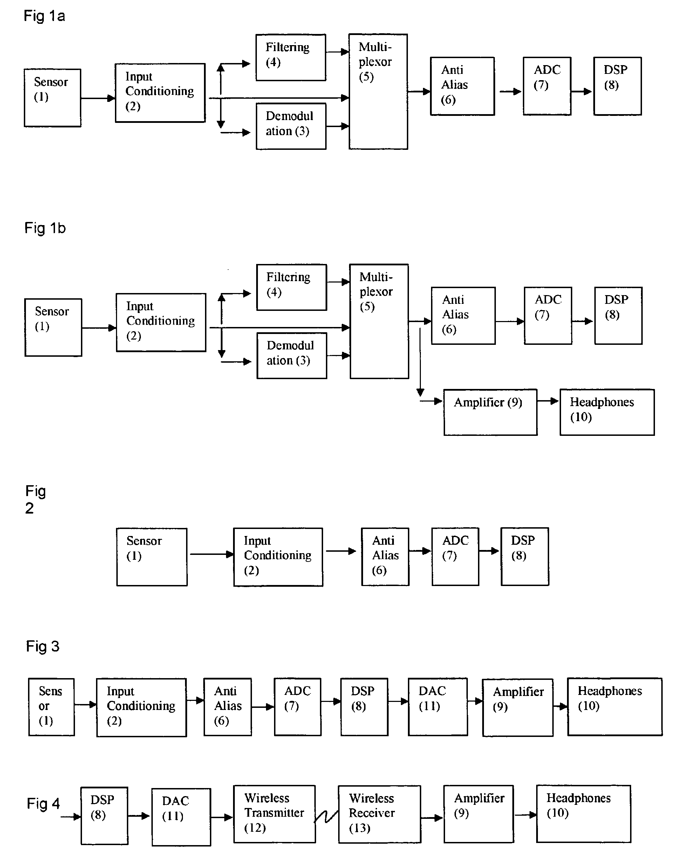

Off-line vibrational analyzers in accordance with the invention may comprise components illustrated with reference to Fig 1 a and Fig 1 b. These figures illustrate possible configurations of off-line vibrational analyzers which combine some or all of the following features:
(1) A sensor 1, for example an accelerometer, that measures a parameter that relates to the condition of the machine that is being examined.
(2) Input conditioning 2; providing sensor power and gain if required.
(3) Demodulation 3, typically some form of band limiting filters followed by demodulation (examples are enveloping, GSe). This may also include demodulating signals that are ultrasonic (SEE or Acoustic emissions).
(4) Filtering 4 to remove spurious out of band signals or time domain integration.
(5) A multiplexor 5 to select straight, filtered or demodulated paths.
(6) Anti-alias filter 6 for removal of out of band signals.
(7) An analogue to digital converter (ADC) 7 to convert an analogue signal into digital representation.
(8) A digital signal processor (DSP) 8 to perform digital processing, for example FFT.

In addition to the above mentioned features, analyzers will traditionally comprise some kind of user input, such as keys and switches to make selections, and also output(s), such as displays and lights/indicators to give feedback and results to a user. These features are not illustrated.

In off-line vibrational analyzers which use digital signal processing 8, an analogue signal derived from a sensor 1 is converted to a digital signal for treatment by the digital signal processor 8. In configurations similar to that of Fig 1a, filtering 4 and/or demodulation 3 of a signal from the sensor 1 is performed on the analogue signal prior to its conversion to a digital signal. Signal processing is performed at least partly in the analogue domain.

It is often useful and helpful for maintenance engineers to listen to machines being analysed so as to perceive vibrational characteristics. The previous practice of using a screwdriver pressed against the machine and held to the ear of the user to listen to a running machine is now rarely used due, notably, to health and safety considerations (the proximity of the user's head to rotating machinery and/or the use of ear defenders). In addition, the quality and information that can be detected with such a method is less than optimal.

Fig 1b shows a configuration which may be used to provide a listening function to a configuration similar to that illustrated in Fig 1 a using:
(9) Amplifier 9 to boost output from the analogue signal path to levels required to drive a headphone.
(10) Headphones 10 for a user to listen into the analogue signal.

Such a support for connecting a headphone 10 is a beneficial feature. In the Fig 1 b set-up the user may for example be able to select whether to listen to a raw, unfiltered signal, a filtered signal or to the demodulated signal depending on the condition of the machine and personal preference. What is listened to is a live signal and the user can correlate this to the processed signal on the display. This is a radical improvement on using a screwdriver. The headphones 10 might be integrated into hearing protectors. In an attempt to reduce costs in such vibrational analyzers, traditionally only one channel may be made available and/or not all filter paths may be accessible and/or the headphones may for example have a fixed gain.

There is an attempt to move more and more into the digital domain. Fig 2 shows an example of a configuration similar to that of Fig 1a, but with the difference that demodulation and/or filtering functions are performed in the digital domain. This may increase linearity and/or reduce costs. It also allows a greater flexibility as software controlled functionality can be tuned/improved, added and/or deleted without changing any hardware.

Considering a configuration similar to that of Fig 2, unlike that of the Fig 1a configuration, it is no longer possible to tap off a demodulated and/or filtered signal and feed this to an amplifier 9 and subsequently to headphones 10. As it is important to keep the same phase of the input signal to both headphones and further digital processing, attempts could be made to add a headphone feature to such units by adding analogue filters before a headphone amplifier, similar to the analogue section of Fig 1 b. However, this would be costly and unwieldy and could lead to confusion if the headphones are listening to a different signal than is being collected/displayed by the unit.

According to the invention this problem is solved by configuring a digital to analogue converter (DAC) directly connected to the DSP. As can be seen in a first embodiment of the invention in Fig 3, a headphone function is created by feeding the digital processed signal from the DSP (digital signal processor) 8 to a DAC (digital to analogue converter) 11, suitably a dual-DAC for the possibility of stereo or just separate left/right output. In addition to the functions described above, this embodiment of an off-line signal analyzer comprises:
(11) A DAC 11, suitably a dual-DAC, driven from the DSP 8 with a digital stream representing, in this embodiment, a desired audio output which drives a headphone amplifier 9 and headphones 10.

The DSP 8 is provided with additional firmware to output the desired signal or stream of data. According to the invention the phase of the signal fed to the headphones is synchronized to that being received and processed by the DSP. This is made possible by synchronizing the ADC(s) 7 and the DAC(s) 11. Suitably, the ADC(s) and the DAC(s) have a common control clock, and to fully control the signal processing, it is advantageous if also the DSP 8 has a common control clock with the ADC 7 and/or the DAC 11.

Thus according to the invention, the DAC 11 provides an analogue signal derived from the digital signal processor 8 to an analogue device, e.g. headphones 10.

The digital data stream may for example represent one of the following:
1) The raw signal
2) A filtered signal. The shape and order of the filter are no longer constrained by the hardware present.
3) A filtered and demodulated signal. If required more than one implementation of demodulation can be included.

On multiple channel analyzers any channel may be easily selected. The signal may be attenuated and/or amplified in the digital domain. Different signals may be fed to the left and right ears of headphones. Ultrasonic and/or subsonic signals may be shifted into the audio range. The frequency response of the output digital stream may be customised to an individual, for example to compensate for hearing loss (not uncommon in maintenance engineers). Non measurement related audio, for example pre-recorded or stored signals, may be provided.

As the DSP 8 can generate multiple data streams concurrently, the invention may provide for the user to switch between multiple data streams; this may be achieved without having to wait on filter settling time.

The output of the vibrational analyzer may comprise a wireless transmitter configured to transmit the analogue signal to a peripheral device, for example to feed this signal to headphones or another listening device via a wireless link.

This could involve:
1) Sending it to wireless headphones
2) Sending the signal to another person for their opinion.

An embodiment showing this is illustrated in Fig 4 and further comprises
(12) A wireless transmitter 12
(13) A wireless receiver 13 (which may suitably be part of a peripheral device)

Any device to which the output is connected may be detectable, for example by the device providing an identification signal back to the analyzer. This may provide information feedback to identify what peripheral device(s) is or are connected (e.g. headset, printer), and may be used to determine the nature of the output, for example to distinguish if audio, strobe trigger or a sweep signal should be provided as the output. Some systems, particularly wireless systems, work on profiles. That is, a new device broadcasts what profiles it supports, for example audio, serial, etc. Thus a vibrational analyzer in accordance with the invention may be configured to determine the appropriate type of output to be directed to a particular peripheral device.

The vibrational analyzer may have at least one output provided with an analogue signal derived from the digital signal processor. Preferably, this output or at least one additional output is a multifunctional output i.e. an output adapted to be connected to more than one type of device. It is thus possible to have a plurality of peripheral devices, for example headphones and a strobe, connectable to the same output (which may be a transmitter).

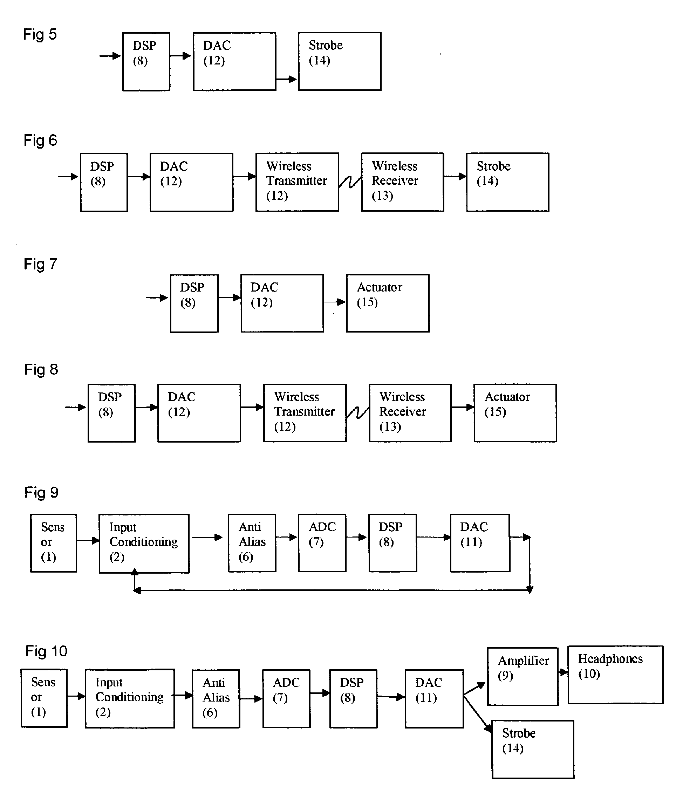

Fig 5 illustrates an embodiment in which a multifunctional output (which may be a headphone output) is fed to a strobe 14. This may be configured:
1) To trigger a strobe based on the input analogue signal, for example one time.
2) To trigger a strobe based on a user input.
3) With a variable phase/frequency output so as to be able to "freeze" a rotating part of e.g. a rolling element bearing at different rotational angles.
4) To trigger a high speed camera to take photographs of the machine for future analysis.

Fig 6 illustrates an embodiment in which the link between the analyzer and the strobe 14 is a wireless link 12, 13.

The strobe 14 may be used to fire a pulse or series of pulses of light that "freezes" the rotation of a machine. If the strobe 14 is fired each time when for example a rotating part is in the same rotational position, then the rotating part will appear "frozen" (not rotating).

Fig 7 and Fig 8 illustrate further embodiments which may be used to provide a frequency response/transfer function of an object. The vibrational analyzer may output a signal that is used to excite an object such as a machine or structure under examination. In the embodiment of Fig 7, a DAC 12 output is fed to an actuator 15, which is arranged to stimulate for example a structure to be analysed. The vibrational analyzer may sweep the output signal up and/or down in frequency to excite the actuator 15 and thus the structure being analysed at a desired frequency range or at a plurality of desired frequencies and measure the response by means of the sensor 1.

The vibrational analyzer may also output some form of band limited noise that can be used to measure the systems response.

Fig 8 illustrates a similar arrangement in which an actuator 15 is linked to the vibrational analyzer by a wireless link 12, 13.

In the embodiments illustrated in Figs 4 to 8, it is to be understood that the input signal to the digital signal processor 8 is suitably derived from a series arrangement of a sensor 1, Input Conditioning 2, anti-alias filter 6, and analogue-to-digital converter 7 as shown in Fig 3.

Fig 9 illustrates an embodiment in which the output of a DAC 11 is fed back to the input of the unit, suitably directly to the input conditioning 2, for example to enable a check of the unit's operation, a self-test function. This feedback loop can be either internal or external to the analyzer. This self test mode may for example be combined with a demonstration mode. If an external feedback is used, i.e. a physical external wire is connected between the output and the sensor input, then this may be detected and the vibrational analyzer put automatically in a self test mode and possibly in addition in also a demonstration mode.

Where a headphone output is provided, the analyzer may suitably be arranged to be able to also playback pre-recorded signals/messages that can be used to prompt the user with for example an instruction guide. This may be useful:
1) When the user cannot see the unit's screen properly.
2) He does not wish to look at the screen (he wishes to concentrate on other factors, for example personal safety).
3) For entertainment, for example music.
4) For route instructions (what machines, where on the machines, where the machines are)

In a further embodiment of the invention, the output is a multifunctional external output configured so that it may provide a signal to at least two devices; a device may be disconnected to allow connection to the other of the at least two devices or the multifunctional external output may be connected to at least two devices at the same time. For example, as is illustrated in Fig 10 embodiment the multifunctional external output is configured to provide a signal to both headphones 10 and a strobe 14. In this embodiment, either the headphones and/or the strobe may be connected to the multifunctional output, for example by being plugged in to a socket provided at the vibrational analyzer. The DAC can in some embodiments be of a dual type, providing two simultaneous outputs. In further embodiments, more than one DAC can be provided, for example two DACs of the dual type or one DAC of the dual type and one DAC of a single type.

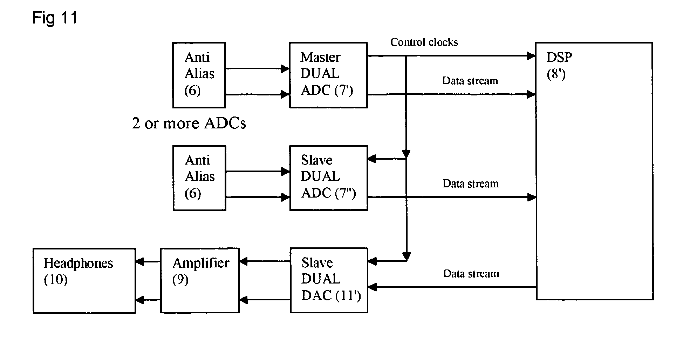

Fig 11 illustrates a configuration which may be used to implement certain embodiments of the invention with an in-phase multi-channel system. The introduction of the Pro Audio standard has brought to the market a number of fast (∼200 kHz), low noise (24 Bit) and low cost ADCs/DACs from several companies. These devices are from a specification point of view suitable for noise and vibration measurement. The invention attains a known and synchronized phase relationship between ADC(s) and DAC(s), from input to output. The signals between the digital units must also be minimised to ensure that coupling from the analogue to the digital circuitry is minimised.

Fig 11 illustrates an implementation of the invention by means of the control clocks such as frame/clock, left right clock and bit clock. As is illustrated, the embodiment according to Fig 11 comprises two ADCs 7', 7" and one dual DAC 11'. According to this implementation, one of the ADCs 7' is a master and the other ADC 7", the DAC 11' and the DSP 8' are control clock slaves. This means that all the digital units and the converters are synchronized by the same control clock originating from one source. This enables full control of the phase from input to output. Once again, it is to be understood that the input to the two anti-alias filters 6 is derived from two separate sensors (not shown) after signal conditioning (not shown).

Alternatively to what is shown in Fig 11, the DSP can be the control clock master and all the ADCs and the DACs are slaves, or one of the DACs is a control clock master and the DSP, all the ADCs and the other DACs are control clock slaves.

Any feature of the shown embodiments of the invention may be combined with any other feature or features as long as there is not a conflict between these features.

### REFERENCE NUMERALS

1: A sensor, for example an accelerometer, that measures a parameter that relates to the condition of the machine that is being examined.
2: Input conditioning; providing sensor power and gain if required
3: Demodulation, typically some form of band limiting filters followed by demodulation (examples are enveloping, GSe). This may also include demodulating signals that are ultrasonic (SEE or Acoustic emissions)
4: Filtering to remove spurious out of band signals or time domain integration
5: Multiplexor to select straight, filtered or demodulated paths
6: Anti-alias for removal of out of band signals
7: An analogue to digital converter (ADC) to convert analogue signal into digital representation
7': An ADC, control clock master
7": An ADC, control clock slave
8: A digital signal processor (DSP) to perform digital processing, for example FFT
8': A DSP, control clock slave
9: Amplifier to boost output from analogue signal path to levels required to drive a headphone
10: Headphones for user to listen into analogue signal
11: A DAC, driven from the DSP with a digital stream representing, in this embodiment, a desired audio output which drives a headphone amplifier and headphones
11': A DAC, control clock slave
12: A wireless transmitter
13: A wireless receiver (which may be part of a peripheral device)
14: Strobe
15: Actuator

## Claims

1. An off-line signal analyzer comprising an analogue to digital converter (7, 7', 7"), which converts analogue input signals to digital signals, the analogue input signals comprising a phase, where the analyzer further comprises a digital signal processor (8, 8') configured to perform digital processing on the digital signals from the analogue to digital converter, the signal analyzer further comprises a digital to analogue converter (11, 11') configured to provide an analogue output signal derived from the digital signal processor to an output, **characterised in that** the digital to analogue converter (11, 11') is synchronized with the analogue to digital converter (7, 7', 7") at least with respect to the signal phase.

2. An off-line signal analyzer in accordance with claim 1, in which the analogue to digital converter (7, 7', 7") and the digital to analogue converter (11, 11') have a common control clock.

3. An off-line signal analyzer in accordance with any preceding claim, in which the digital signal processor (8, 8') has a common control clock with the analogue to digital converter (7, 7', 7") and/or the digital to analogue converter (11, 11').

4. An off-line signal analyzer in accordance with claim 2 or 3, in which one of the analogue to digital converter, the digital to analogue converter, or the digital signal processor is a control clock master and the others are control clock slaves.

5. An off-line signal analyzer in accordance with any preceding claim, in which the analogue output signal provided to the output comprises a real time component.

6. An off-line signal analyzer in accordance with any preceding claim, in which the digital signal processor (8, 8') is arranged to provide the digital to analogue converter (11, 11') with digital signals such that the analogue output signal is configured to drive a peripheral device selected from the list consisting of:
a listening device;
headphones (10);
an image recorder;
a camera;
a timing device;
a strobe light (14);
an actuator (15);
a frequency generator; and
a signal source for exciting a structure to be examined.

7. An off-line signal analyzer in accordance with any preceding claim, in which the digital signal processor (8, 8') is arranged to provide the digital to analogue converter (11, 11') with digital signals such that the analogue output signal is configured to provide a feedback signal used as the analogue input signal of the off-line signal analyzer.

8. An off-line signal analyzer in accordance with any preceding claim, in which the analogue output signal comprises at least one signal selected from the list consisting of:
a signal configured to drive a listening device;
a signal configured to drive headphones;
a signal configured to control an image recorder;
a signal configured to control a camera;
a signal configured to control a timing device;
a signal configured to control a strobe light;
a signal configured to control an actuator;
a signal configured to control a frequency generator; and
a signal configured to control a signal source for exciting a structure to be examined.

9. An off-line signal analyzer in accordance with any preceding claim, in which the output is configured to provide a signal to at least two different peripheral devices.

10. An off-line signal analyzer in accordance with claim 9, in which the output is configured to simultaneously provide a signal to a least two different peripheral devices.

11. An off-line signal analyzer in accordance with any preceding claim, comprising a selector configured to permit selection of the analogue output signal from at least two signals selected from the list consisting of:
a signal configured to drive a listening device;
a signal configured to control an image recorder;
a signal configured to control a timing device;
a signal configured to control a strobe light;
a signal configured to control a signal source for exciting a structure to be examined.

12. An off-line signal analyzer in accordance with any preceding claim, in which the output comprises a wireless transmitter (12) configured to transmit a signal comprising the analogue signal.

13. An off-line signal analyzer in accordance with any preceding claim, in which the analogue output signal comprises at least one signal selected from the list consisting of:
a signal that is representative of the input signal to the digital signal processor;
a signal that has been digitally filtered by the digital signal processor;
a signal that has been digitally filtered and demodulated by the digital signal processor;
a signal that has been digitally attenuated by the digital signal processor;
a signal that has been digitally amplified by the digital signal processor;
a signal that has been shifted in frequency by the digital signal processor; and
a stereo signal having left and right channels providing different data.

14. An off-line signal analyzer in accordance with any preceding claim, comprising a selector configured to permit selection of the analogue signal from at least two signals selected from the list consisting of:
a signal that is representative of the input signal to the digital signal processor;
a signal that has been digitally filtered by the digital signal processor;
a signal that has been digitally filtered and demodulated by the digital signal processor;
a signal that has been digitally attenuated by the digital signal processor;
a signal that has been digitally amplified by the digital signal processor;
a signal that has been shifted in frequency by the digital signal processor;
a stereo signal having left and right channels providing different data; and
a pre-recorded signal.

15. An off-line signal analyzer in accordance with any preceding claim, in which the output is configured to output at least one of a plurality of analogue signals derived from the digital signal processor and selectable by a user.

16. An off-line signal analyzer in accordance with any preceding claim, in which the analogue signal derived from the digital signal processor is configured to drive headphones.

17. An off-line signal analyzer in accordance with any preceding claim, in which the output is configured to be controlled by a master selected from: the digital signal processor; and an ADC which provides an input to the digital signal processor.

## Patentansprüche

1. Offline-Signalanalysator, der einen Analog/Digital-Umsetzer (7, 7', 7") umfasst, der analoge Eingangssignale in digitale Signale umsetzt, wobei die analogen Eingangssignale eine Phase besitzen, wobei der Analysator ferner einen digitalen Signalprozessor (8, 8') umfasst, der konfiguriert ist, eine digitale Verarbeitung an den digitalen Signalen aus dem Analog/Digital-Umsetzer durchzuführen, wobei der Signalanalysator ferner einen Digital/Analog-Umsetzer (11, 11') umfasst, der konfiguriert ist, einem Ausgang ein analoges Ausgangssignal bereitzustellen, das von dem digitalen Signalprozessor abgeleitet wird, **dadurch gekennzeichnet, dass** der Digital/Analog-Umsetzer (11, 11') mit dem Analog/Digital-Umsetzer (7, 7', 7") wenigstens in Bezug auf die Signalphase synchronisiert ist.

2. Offline-Signalanalysator nach Anspruch 1, wobei der Analog/Digital-Umsetzer (7, 7', 7") und der Digital/Analog-Umsetzer (11, 11') einen gemeinsamen Steuertakt aufweisen.

3. Offline-Signalanalysator nach einem der vorhergehenden Ansprüche, wobei der digitale Signalprozessor (8, 8') einen gemeinsamen Steuertakt mit dem Analog/Digital-Umsetzer (7, 7', 7") und/oder dem Digital/Analog-Umsetzer (11, 11') aufweist.

4. Offline-Signalanalysator nach Anspruch 2 oder 3, wobei der Analog/Digital-Umsetzer oder der Digital/Analog-Umsetzer oder der digitale Signalprozessor ein Steuertakt-Master ist und die jeweils anderen Steuertakt-Slaves sind.

5. Offline-Signalanalysator nach einem der vorhergehenden Ansprüche, wobei das dem Ausgang zugeführte analoge Ausgangssignal eine Echtzeitkomponente umfasst.

6. Offline-Signalanalysator nach einem der vorhergehenden Ansprüche, wobei der digitale Signalprozessor (8, 8') konfiguriert ist, dem Digital/Analog-Umsetzer (11, 11') digitale Signale dergestalt zuzuführen, dass das analoge Ausgangssignal konfiguriert ist, eine Peripherievorrichtung anzusteuern, die aus der Liste ausgewählt ist, die aus Folgendem besteht:
einer Abhörvorrichtung;
Kopfhörer (10);
einer Bildaufzeichnungsvorrichtung;
einer Kamera;
einer Zeitmessvorrichtung;
einem Stroboskop (14);
einem Aktuator (15);
einem Frequenzgenerator; und
einer Signalquelle zum Anregen einer Struktur, die untersucht werden soll.

7. Offline-Signalanalysator nach einem der vorhergehenden Ansprüche, wobei der digitale Signalprozessor (8, 8') konfiguriert ist, dem Digital/Analog-Umsetzer (11, 11') digitale Signale dergestalt zuzuführen, dass das analoge Ausgangssignal konfiguriert ist, ein Rückkopplungssignal bereitzustellen, das als das analoge Eingangssignal des Offline-Signalanalysators verwendet wird.

8. Offline-Signalanalysator nach einem der vorhergehenden Ansprüche, wobei das analoge Ausgangssignal wenigstens ein Signal umfasst, das aus der Liste ausgewählt ist, die aus Folgendem besteht:
einem Signal, das konfiguriert ist, eine Abhörvorrichtung anzusteuern;
einem Signal, das konfiguriert ist, Kopfhörer anzusteuern;
einem Signal, das konfiguriert ist, eine Bildaufzeichnungsvorrichtung zu steuern;
einem Signal, das konfiguriert ist, eine Kamera zu steuern;
einem Signal, das konfiguriert ist, eine Zeitmessvorrichtung zu steuern;
einem Signal, das konfiguriert ist, ein Stroboskop zu steuern;
einem Signal, das konfiguriert ist, einen Aktuator zu steuern;
einem Signal, das konfiguriert ist, einen Frequenzgenerator zu steuern; und
einem Signal, das konfiguriert ist, eine Signalquelle zum Anregen einer Struktur, die untersucht werden soll, zu steuern.

9. Offline-Signalanalysator nach einem der vorhergehenden Ansprüche, wobei der Ausgang konfiguriert ist, ein Signal für wenigstens zwei unterschiedliche Peripherievorrichtungen bereitzustellen.

10. Offline-Signalanalysator nach Anspruch 9, wobei der Ausgang konfiguriert ist, gleichzeitig ein Signal für wenigstens zwei unterschiedliche Peripherievorrichtungen bereitzustellen.

11. Offline-Signalanalysator nach einem der vorhergehenden Ansprüche, der eine Auswahlvorrichtung umfasst, die konfiguriert ist, Auswahl des analogen Ausgangssignals aus wenigstens zwei Signalen zu gestatten, die aus der Liste ausgewählt sind, die aus Folgendem besteht:
einem Signal, das konfiguriert ist, eine Abhörvorrichtung anzusteuern;
einem Signal, das konfiguriert ist, eine Bildaufzeichnungsvorrichtung zu steuern;
einem Signal, das konfiguriert ist, eine Zeitmessvorrichtung zu steuern;
einem Signal, das konfiguriert ist, ein Stroboskop zu steuern;
einem Signal, das konfiguriert ist, eine Signalquelle zum Anregen einer Struktur, die untersucht werden soll, zu steuern.

12. Offline-Signalanalysator nach einem der vorhergehenden Ansprüche, wobei der Ausgang einen drahtlosen Sender (12) umfasst, der konfiguriert ist, ein Signal zu senden, das das analoge Signal umfasst.

13. Offline-Signalanalysator nach einem der vorhergehenden Ansprüche, wobei das analoge Ausgangssignal wenigstens ein Signal umfasst, das aus der Liste ausgewählt ist, die aus Folgendem besteht:
einem Signal, das repräsentativ ist für das Eingangssignal zum digitalen Signalprozessor;
einem Signal, das durch den digitalen Signalprozessor digital gefiltert wurde;
einem Signal, das durch den digitalen Signalprozessor digital gefiltert und demoduliert wurde;
einem Signal, das durch den digitalen Signalprozessor digital gedämpft wurde;
einem Signal, das durch den digitalen Signalprozessor digital verstärkt wurde;
einem Signal, dessen Frequenz durch den digitalen Signalprozessor verschoben wurde; und
einem Stereosignal, das linke und rechte Kanäle aufweist, die unterschiedliche Daten bereitstellen.

14. Offline-Signalanalysator nach einem der vorhergehenden Ansprüche, der eine Auswahlvorrichtung umfasst, die konfiguriert ist, Auswahl des analogen Signals aus wenigstens zwei Signalen zu gestatten, die aus der Liste ausgewählt sind, die aus Folgendem besteht:
einem Signal, das repräsentativ ist für das Eingangssignal zum digitalen Signalprozessor;
einem Signal, das durch den digitalen Signalprozessor digital gefiltert wurde;
einem Signal, das durch den digitalen Signalprozessor digital gefiltert und demoduliert wurde;
einem Signal, das durch den digitalen Signalprozessor digital gedämpft wurde;
einem Signal, das durch den digitalen Signalprozessor digital verstärkt wurde;
einem Signal, dessen Frequenz durch den digitalen Signalprozessor verschoben wurde;
einem Stereosignal, das linke und rechte Kanäle aufweist, die unterschiedliche Daten bereitstellen; und
einem aufgezeichneten Signal.

15. Offline-Signalanalysator nach einem der vorhergehenden Ansprüche, wobei der Ausgang konfiguriert ist, wenigstens eines von mehreren analogen Signalen auszugeben, die von dem digitalen Signalprozessor abgeleitet und durch einen Benutzer auswählbar sind.

16. Offline-Signalanalysator nach einem der vorhergehenden Ansprüche, wobei das von dem digitalen Signalprozessor abgeleitete analoge Signal konfiguriert ist, Kopfhörer anzusteuern.

17. Offline-Signalanalysator nach einem der vorhergehenden Ansprüche, wobei der Ausgang konfiguriert ist, durch einen Master gesteuert zu werden, ausgewählt aus: dem digitalen Signalprozessor; und einem ADC, der eine Eingabe für den digitalen Signalprozessor bereitstellt.

## Revendications

1. Analyseur de signaux hors ligne, comprenant un convertisseur analogique-numérique (7, 7', 7"), qui convertit des signaux analogiques d'entrée en signaux numériques, les signaux analogiques d'entrée comprenant une phase, l'analyseur comprenant en outre un processeur numérique de signaux (8, 8') conçu pour soumettre à un traitement numérique les signaux numériques provenant du convertisseur analogique-numérique, l'analyseur de signaux comprenant en outre un convertisseur numérique-analogique (11, 11') conçu pour fournir un signal de sortie analogique obtenu du processeur numérique de signaux à une sortie, **caractérisé en ce que** le convertisseur numérique-analogique (11, 11') est synchronisé avec le convertisseur analogique-numérique (7, 7', 7") au moins par rapport à la phase du signal.

2. Analyseur de signaux hors ligne selon la revendication 1, dans lequel le convertisseur analogique-numérique (7, 7', 7") et le convertisseur numérique-analogique (11, 11') possèdent une horloge de commande commune.

3. Analyseur de signaux hors ligne selon l'une quelconque des revendications précédentes, dans lequel le processeur numérique de signaux (8, 8') possède une horloge de commande commune avec le convertisseur analogique-numérique (7, 7', 7") et/ou le convertisseur numérique-analogique (11, 11').

4. Analyseur de signaux hors ligne selon la revendication 2 ou 3, dans lequel le convertisseur analogique-numérique ou bien le convertisseur numérique-analogique ou bien le processeur numérique de signaux est un maître d'horloge de commande et les autres sont des esclaves d'horloge de commande.

5. Analyseur de signaux hors ligne selon l'une quelconque des revendications précédentes, dans lequel le signal de sortie analogique fourni à la sortie comprend une composante en temps réel.

6. Analyseur de signaux hors ligne selon l'une quelconque des revendications précédentes, dans lequel le processeur numérique de signaux (8, 8') est conçu pour fournir des signaux numériques au convertisseur numérique-analogique (11, 11') de manière à ce que le signal de sortie analogique soit conçu pour piloter un dispositif périphérique choisi dans la liste constituée par :
un dispositif d'écoute ;
un casque (10) ;
un enregistreur d'images ;
un appareil photographique ;
un dispositif de temporisation ;
une lumière stroboscopique (14) ;
un actionneur (15) ;
un générateur de fréquence ; et
une source de signaux pour exciter une structure à examiner.

7. Analyseur de signaux hors ligne selon l'une quelconque des revendications précédentes, dans lequel le processeur numérique de signaux (8, 8') est conçu pour fournir des signaux numériques au convertisseur numérique-analogique (11, 11') de manière à ce que le signal de sortie analogique soit conçu pour fournir un signal de rétroaction utilisé comme signal d'entrée analogique de l'analyseur de signaux hors ligne.

8. Analyseur de signaux hors ligne selon l'une quelconque des revendications précédentes, dans lequel le signal de sortie analogique comprend au moins un signal choisi dans la liste constituée par :
un signal conçu pour piloter un dispositif d'écoute ;
un signal conçu pour piloter un casque ;
un signal conçu pour commander un enregistreur d'images ;
un signal conçu pour commander un appareil photographique ;
un signal conçu pour commander un dispositif de temporisation ;
un signal conçu pour commander une lumière stroboscopique ;
un signal conçu pour commander un actionneur ;
un signal conçu pour commander un générateur de fréquence ; et
un signal conçu pour commander une source de signaux pour exciter une structure à examiner.

9. Analyseur de signaux hors ligne selon l'une quelconque des revendications précédentes, dans lequel la sortie est conçue pour fournir un signal à au moins deux dispositifs périphériques différents.

10. Analyseur de signaux hors ligne selon la revendication 9, dans lequel la sortie est conçue pour fournir un signal simultanément à au moins deux dispositifs périphériques différents.

11. Analyseur de signaux hors ligne selon l'une quelconque des revendications précédentes, comprenant un sélecteur conçu pour permettre la sélection du signal de sortie analogique à partir d'au moins deux signaux choisis dans la liste constituée par :
un signal conçu pour piloter un dispositif d'écoute ;
un signal conçu pour commander un enregistreur d'images ;
un signal conçu pour commander un dispositif de temporisation ;
un signal conçu pour commander une lumière stroboscopique ;
un signal conçu pour commander une source de signaux pour exciter une structure à examiner.

12. Analyseur de signaux hors ligne selon l'une quelconque des revendications précédentes, dans lequel la sortie comprend un émetteur sans fil (12) conçu pour émettre un signal comprenant le signal analogique.

13. Analyseur de signaux hors ligne selon l'une quelconque des revendications précédentes, dans lequel le signal de sortie analogique comprend au moins un signal choisi dans la liste constituée par :
un signal qui représente le signal d'entrée appliqué au processeur numérique de signaux ;
un signal qui a été filtré numériquement par le processeur numérique de signaux ;
un signal qui a été filtré et démodulé numériquement par le processeur numérique de signaux ;
un signal qui a été atténué numériquement par le processeur numérique de signaux ;
un signal qui a été amplifié numériquement par le processeur numérique de signaux ;
un signal qui a été déplacé en fréquence par le processeur numérique de signaux ; et
un signal stéréo comprenant des voies de gauche et de droite fournissant des données différentes.

14. Analyseur de signaux hors ligne selon l'une quelconque des revendications précédentes, comprenant un sélecteur conçu pour permettre la sélection du signal de sortie analogique à partir d'au moins deux signaux choisis dans la liste constituée par :
un signal qui représente le signal d'entrée appliqué au processeur numérique de signaux ;
un signal qui a été filtré numériquement par le processeur numérique de signaux ;
un signal qui a été filtré et démodulé numériquement par le processeur numérique de signaux ;
un signal qui a été atténué numériquement par le processeur numérique de signaux ;
un signal qui a été amplifié numériquement par le processeur numérique de signaux ;
un signal qui a été déplacé en fréquence par le processeur numérique de signaux ;
un signal stéréo comprenant des voies de gauche et de droite fournissant des données différentes ; et
un signal préenregistré.

15. Analyseur de signaux hors ligne selon l'une quelconque des revendications précédentes, dans lequel la sortie est conçue pour fournir au moins un parmi une pluralité de signaux analogiques obtenus du processeur numérique de signaux et sélectionnables par un utilisateur.

16. Analyseur de signaux hors ligne selon l'une quelconque des revendications précédentes, dans lequel le signal analogique obtenu du processeur numérique de signaux est conçu pour piloter un casque.

17. Analyseur de signaux hors ligne selon l'une quelconque des revendications précédentes, dans lequel la sortie est conçue pour être commandée par un maître choisi parmi : le processeur numérique de signaux ; et un convertisseur analogique-numérique ADC qui fournit une entrée au processeur numérique de signaux.
